# EUROPEAN PATENT APPLICATION

(11) **EP 1 974 864 A1**
(43) Date of publication of application: **01.10.2008**
(21) Application number: 07006202.1
(22) Date of filing: 27.03.2007
(51) Int. Cl.: B25B 21/00, G01M 11/06, B25F 5/00

(54) **Cordless power tool with intelligent operation and control**

(71) Applicant: Laboratorium Voor Electronische Toepassingen NV, 9800 Deinze (BE)
(72) Inventor: Lambert, Stefaan, 9800 Deinze (BE); Pinoy, Yves, 9800 Deinze (BE)

(57) **Abstract**

The invention provides a novel cordless power tool (1) such as e.g. an electrically powered screw driver, comprising an autonomous power source (3), preferably of the type ultracapacitor for driving an electric motor (8), and being adapted for instant control and automatic actuation by means of wireless communication with a CPU unit. The tool performs position adjustment of device components, for instance the position tuning of car headlights. In the latter application the cordless and wireless tool forms an operational part of an installation including an optical unit for light beam pattern measurement and aiming, also connected with the CPU control unit. The tool enables automatic position/distance tuning operations on different components incl. sensors and the like in several industrial control situations. Automatic monitoring/control of the power capacity of the tool in terms of charge needs and discharge (motor actuation current) is integrated in the tool system in combination with a charging station (13), which is connected with the CPU unit and adapted for wireless communication with the tool.

## Description

### FIELD OF THE INVENTION

The present invention generally relates to electrically powered tools such as portable electric drills, power screwdrivers and the like. In particular the invention relates to an electrically driven cordless tool with wireless command and control enabling position adjustment and tuning of a device member, especially car components including i.a. headlights, traffic control members etc., by mechanically acting on a position or distance regulating element e.g. a screw of the device member to be adjusted, controlled or fine tuned. More in particular, the invention relates to cordless position adjustment and control tool of the powered screwdriver type adapted for use in an automated system of adjusting headlights of vehicles, for instance new cars rolling from a production line in a car manufacturing plant. Other car components to be regulated or distance controlled may include cruise control sensors, lane departure sensors and similar drive assistance sensors

### BACKGROUND OF THE INVENTION

In an automotive plant the produced cars coming from a manufacturing line normally undergo a number of final inspections and tunings. It is of outmost importance that the headlights, and if applicable also the foglights, are precisely adjusted for traffic security reasons.

The present applicant has developed for this purpose an automated system of headlight alignment and adjustment making use of a car position assessment platform integrated with an optical unit called "Luminoscope^{®}". The headlight alignment system thus includes a special optical block incorporating a converging lens and a CCD camera with CPU controlled shutter for accurate and consistent assessment of light beam patterns of the measured headlights.

Light beam images are processed by an image processing computer integrated therewith, which enables to determine the precise position of the headlight's cut-off line defining a vertical and a horizontal angle to the drive direction against the position of the aligned optical block unit facing the headlight. In case of an observed deviation of the cut-off line image or light beam pattern a headlight position adjustment operation is started automatically, whereby electrically driven smart screwdrivers, configured to apply controllable torque, are positioned on the adjustment screw mechanisms of the headlight, and are then actuated by the steering unit of the pre-aligned optical block until the measured beam image position is corrected.

The whole unit of optical block with screwdrivers etc. is movably mounted on a gantry or the like floor mount, including a movement control trolley with a mast assembly (carrying the optical block) riding along a trolley rail or track, thereby allowing positioning and fine alignment in horizontal and vertical direction of the optical block towards the car headlight and its light beam.

A drawback in using the present "Luminoscope^{®}" (a particular optical unit manufactured by the present applicant) alignment system is the fact that the powered screwdrivers are connected to the mains, requiring connection cables of considerable length for reaching the headlight screws from their holder position at the optical block unit. This gives rise to frequent problems and disturbances in daily practice, the main problems being deficient optical measurements by cable portions passing before the beam image measurement lens of the optical unit, and further the occurrence of fortuitous cable or connection breaks at the screwdriver due to the frequent and often rough transfer handling of the cable connected tools by the operator between their actuating position at the headlights and their rest position in the tool holder at the optical block. Indeed, according to car production rate and inspection needs, the total number of screwdriver transfer operations at a "Luminoscope^{®}" headlight check point often may amount to not less than 1000 per day.

To get rid of the inconvenient cable connections of the electric screwdriver tool and also to avoid unforeseen problems of incorrect light beam imaging, there has been proposed to replace the electric-cable connected tool by battery-powered screwdrivers. A drawback, however, of using battery power is the need of frequent battery (re-) charging operations. For the concerned use in the "Luminoscope^{®}" inspection and aiming stand, elevated battery power for the screwdriver is required during about 30 seconds of the headlight adjustment cycle, whereas the available time for (re-)charging would be about 60 seconds at the holder position before the next screwdriver actuation. In practice no battery can nowadays withstand 1000 charging operations in a few days without considerable decrease in capacity and power up to the point of becoming useless. Also the proposal of smart changing, i.e. recharging the battery after for instance 10 or 20 work cycles and this according to a controlled cycle w.r.t. charging current and voltage, would bring no practical solution, because the charging time needed would then not be compatible with the car production and inspection rate in terms of manufacturing productivity. Moreover, a battery may develop unpredictable memory effects, which gives rise to sudden breakdown after a rather small number of recharging cycles. As a result, the average life of the battery-powered screwdriver tools would no longer than about two days in the aimed "Luminoscope^{®}" application, which is unacceptable in an industrial environment.

The present invention has been conceived to solve the above mentioned problems in a surprisingly advantageous and simple way as set forth herein below.

### SUMMARY OF THE INVENTION

An object of the present invention is to eliminate the above discussed drawbacks of the prior art.

Another object of the invention is to improve a power tool by providing an electric drive without mains power connection and that requires a minimum of maintenance.

It is a further object of the invention to provide a cordless power tool that enables wireless control of its electric motor drive.

Still another object of the invention is to provide a cordless power tool of the screwdriver type that can be integrated in a system for the automatic control and adjustment of car components and other distance tuning means, particularly in an optical system for adjusting the car headlights and other systems for driver assistance sensors.

The above and other objects are achieved by providing a portable electric power tool as defined in claim 1, said power tool being characterized by having a power source consisting of one or more ultracapacitors and preferably comprising means adapted for automatically charging the ultracapacitors to a predetermined power level or required power demand.

According to a preferred aspect of the invention said charge means are contactless and comprise an electrical coil integrated in the tool, which coil functions as the secondary winding of a transformer circuit and cooperates with a primary transformer winding provided in a tool holder station, where the tool is stored after use and charged automatically by being inserted in a seat opening surrounded by said primary winding.

Preferred and additional embodiments of the present invention with respect to the electric motor drive, the motor control circuits, the wireless respectively intelligent tool and operational control units, and furthermore to the use or integration of the novel power tool in industrial operations or systems are set forth in the subjoined claims. An alternative embodiment of an intelligent power tool according to the present invention is defined in claims 13 and 14.

### BRIEF DESCRIPTION OF THE DRAWINGS

The foregoing summary, as well as the following detailed description of the embodiments of the present invention, will be better understood when read in conjunction with the following drawings in which:
Fig. 1 illustrates an operational application of a screw driver type power tool according to the present invention in an automated system of adjusting the lights of a car.
Fig. 2 is an vertical side view of a power tool according to a preferred embodiment of the invention, including a schematic view of the tool when seated in a charging station holder.
Fig. 3 schematizes an vertical cross section of a part of a power tool of the invention in a charging position, illustrating the load transformer principle.
Fig. 4 is a simplified block diagram illustrating communication and control circuits in a power tool of the invention, incl. charging and operational use.
Fig. 5 is a schematic block diagram illustrating electric power circuits of the tool of the invention from charging station to electric motor.

The embodiments shown in the drawings are for the purpose of illustrating the invention. It should be understood, however, that the present invention is not limited to the concrete arrangements shown in the attached drawings.

### DETAILED DESCRIPTION OF THE INVENTION

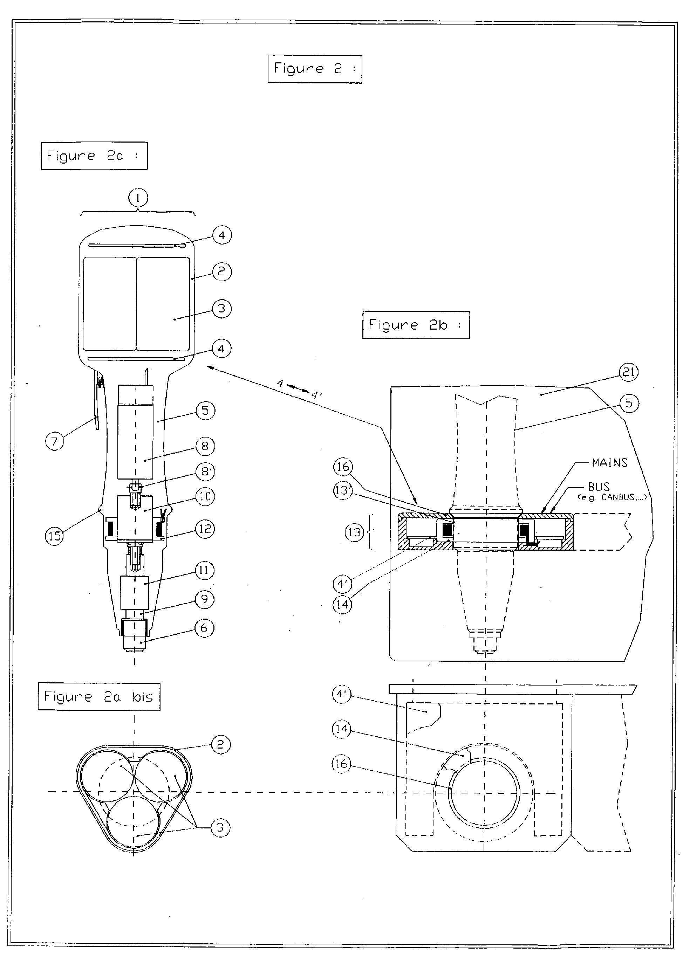

An electric power tool according to a preferred embodiment of the invention is shown in figure 2.a. The illustrated embodiment is directed to an electric driver 1 comprising a relatively larger rearward portion (upper body 2), which houses a power source 3 including one or more ultracapacitor units (three ultracapacitors in this case as depicted in the cross section below fig. 2.a).

Conveniently said body 2 also includes one or more control and communication circuit prints 4 for drive control and information exchange control with wireless communication methods e.g. "blue-tooth".

A tapering transition connects rearward portion 2 with a relatively narrower forward portion 5, being an elongated body ending in a working front with a chuck or bitholder 6 for receiving a driving tool. The longitudinal body may comprise at its upper end a handle or fingertip-operable switch 7. In the longitudinal body 5 an electric motor 8 is disposed, preferably a brushless DC motor, having a drive shaft 8' connected to the spindle 9 of the tool bit, preferably by the intermediate of a speed varying gearbox 10. Optionally a slip-coupling 11 may be incorporated at the chuck spindle 9 so as to avoid over-sollicitating or damaging a driven (drilled or screwed) part during operation.

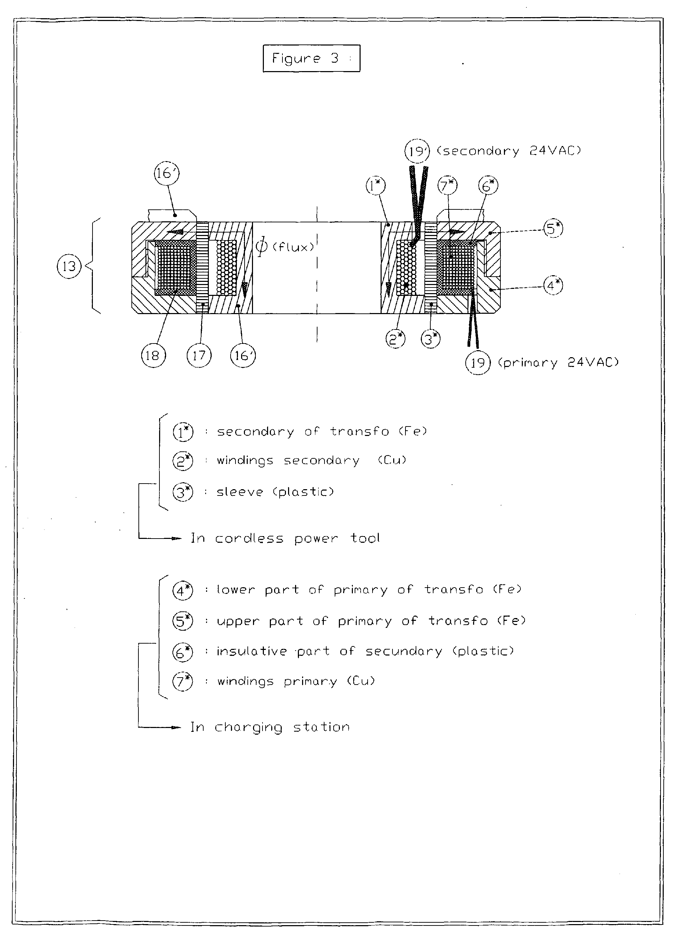

Advantageously, at a mid-location of the forward body 5 there is embedded in the outer circumference thereof a coil winding 12, which takes the function of a secondary winding in the preferred contactless charging mode for the ultracapacitors 3, when the power tool is engaged in a tool holder seat 13 equipped with a primary transformer winding 14, said tool holder forming then with the inserted tool as a transformer-type electric charging unit as shown in fig. 2b and depicted into more detail in fig. 3. For holding the tool body 5 firmly in the seat aperture 13' a laterally extending rim 15 is formed onto the body's exterior shell.

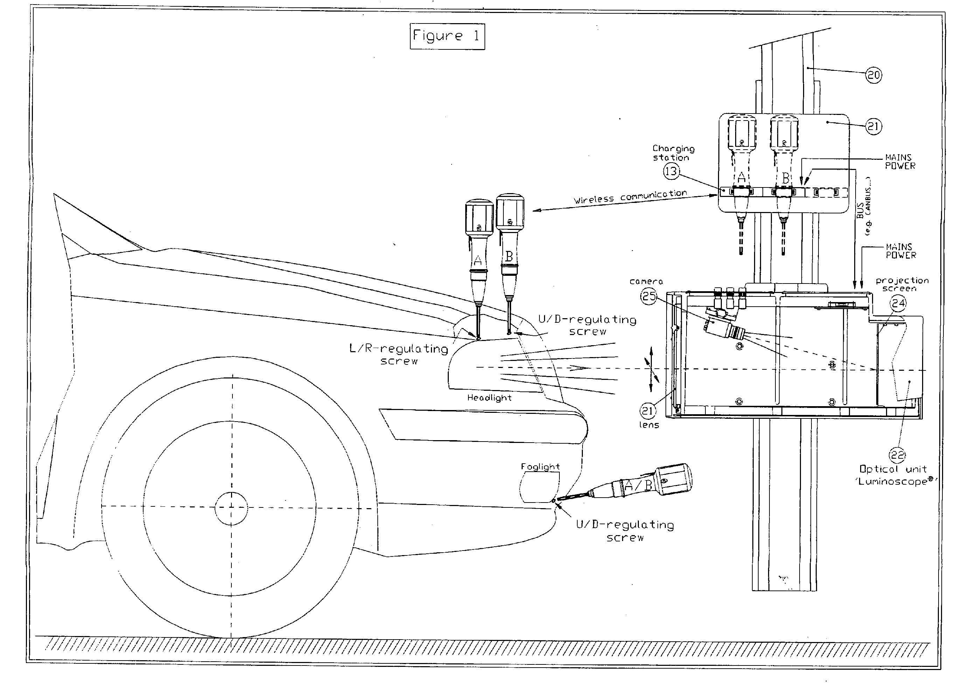

Conveniently the power charging station will be in close operational distance, which in the tool application of figure 1, i.e. head lights adjustments performed in combination with light beam measurements by means of a "luminoscope^{®}"-type optical unit, is a location on a support plate 21 above the "luminoscope^{®}" and thus fixed commonly therewith to a same carriage structure 20.

Figure 3 shows a detailed view of how design of the power tool and charging station are configured in a matching way so as to enable contactless charging of the tool's ultracapacitor power source.

The tool holder 13 contains a seat portion 16 designed on the primary loop of a transformer circuit: said portion is formed in plastic on the transformer metal (iron or iron-silicon and the like alloys) with laying U-shaped cross-section including conductor windings (Cu, Al,..). The mating portion of the tool body 5 is designed as secondary loop of a transformer and contains secondary windings 12 disposed in a U-shaped transformer iron 16' of matching shape and dimension w.r.t. the primary loop. The plastic exterior skin of the tool body forms an insulating sleeve 17 between primary and secondary loops of the transformer circuit formed when the tool is engaged in the tool seat of the holding and charging station. The primary coil has a connection 19 with the mains, while the secondary coil inside the power tool is connected (19') with the ultracapacitors. An U-shaped plastic sleeve 18 inside the iron transforming ring may complete the primary loop of the charging station.

Coming back to figure 1, there is shown a system involving a preferred industrial use of a power tool according to the invention. As can be seen power tools A and B are engaging the head of regulating screws for adjusting and fine tuning the position of a car's headlights respectively foglights in response to simultaneous measurement of the light beam position coordinates, captured with the aid of an optical unit 22, in this case a "Luminoscope^{®}" but other optical units such as e.g. "Regloscope" are also applicable. The light beam entering the optical block through front lens 23 is projected on a screen 24 and the image thereof captured with a camera 25, which is connected with a computer carrying out image analysis for calculating the position coordinates of the actual light beam and to derive there from the position corrections to be carried so as to reach the ideal positions for a perfectly aligned headlight beam. The adjustment information is automatically converted into drive control and steering signals for the screwdriver tool, which are "wireless" communicated to a motor control circuit print, whereupon the electric motor will be actuated in response thereto.

A similar intelligent control and communication subsystem may be provided between the tool or its power source and the charging station, e.g. to verify whether or not charging is necessary when the tool is in the holder to avoid unneeded warming up.

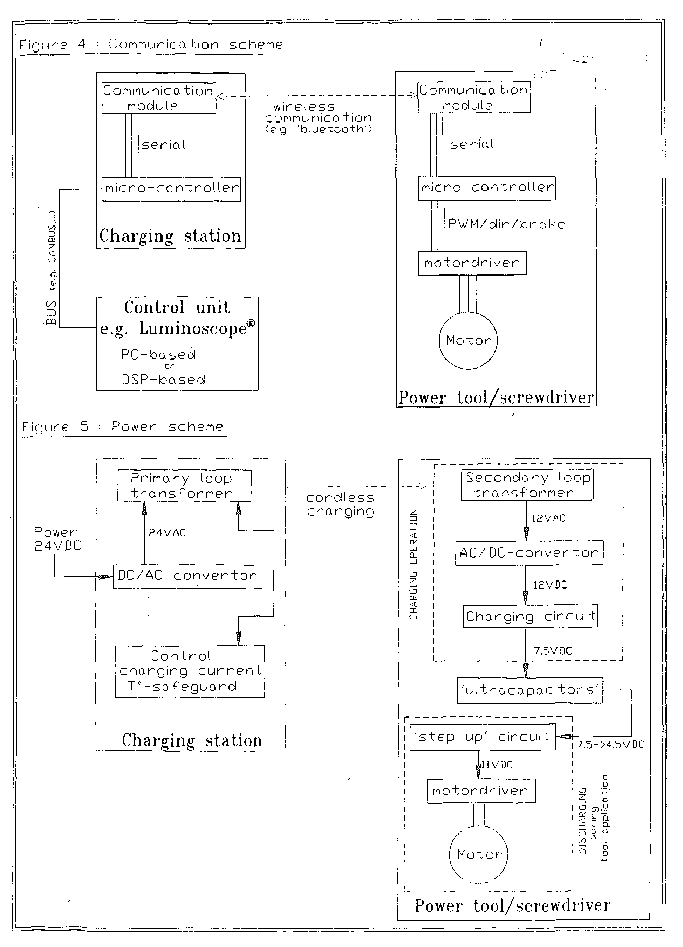

Figures 4 schematizes in a simplified block diagram the main communication and drive control signals or lines running between the power tool, the charging station and the optical unit "Luminoscope^{®}" for effecting a headlight adjusting job with an intelligent cordless power tool of the present invention. Since only the charging station with the "Luminoscope^{®}" are connected to the mains, steering control and actuation of the electric tool is obtained by means of wireless signal transfer involving so called sender/receiver modules in both the tool and the charging station. An example of such wireless protocol can be "blue-tooth".

Figures 5 illustrates in a schematic way how mains power is transferred and converted from the charging station to the cordless power tool, and then how electric power is discharged from the charged ultracapacitors and finally adapted and regulated for supplying a controlled amount of power during a desired time period to the electric motor, and this in response to measured/calculated needs for a component to be adjusted.

Moreover, a plurality of additional improvements and possible modifications in respect of specific parts of the proposed cordless power tool are readily conceivable by the skilled practitioner and the expert in mechanics and electronics. Said modifications and improvements may concern tool/housing, design, selection of suitable electric motors, particular selections of drive circuits for the electric motor, specific components and circuit prints for wireless communication between power tool and charging station respectively central CPU, adapted circuit elements for supervising and controlled charging/discharging of the cordless power source, and furthermore integration circuits or prints combining different required functions with respect to steering, actuating, controlling, monitoring, current converting, signal processing and signal communication exchange possibilities, e.g. blue-tooth and the like. Also the connection of the charging station with the central CPU unit can be realized by various "BUS" - systems, such as e.g. "CANBUS" as shown in the drawings of the exemplified embodiment.

Furthermore, an alternative embodiment of a power tool also comprised in the spirit and scope of the present invention envisages a high-capacity battery having superior charging/discharging characteristics for the cordless powering of the tool. Such a superbattery can be used alone or in combination with an ultracapacitor as the power source of the tool, whereby the battery power source is operatively connected/integrated with a drive circuit for the electric motor and with the wireless communication circuit print of the tool, thereby enabling automatic actuation of the tool for carrying out remotely controlled adjustment operations on position accommodation elements of car and other device components, as illustrated hereinabove in a non-limitative exemplary case of car headlights position adjusting and tuning. All the envisaged adaptations, modifications and uses of the proposed cordless power tool and power tool application systems are understood to fall within the realm and scope of the present invention, and various other changes can be made therein as come within customary practice in the art to which the invention pertains, without departing from the scope of the invention as defined by the appended claims.

## Claims

1. A (portable) cordless power tool, in particular an electrically driven screwdriver, comprising a power source compartment and a drive compartment including an electric motor coupled to a drive system for a desired tool operation, **characterized in that** the power tool comprises one or more ultracapacitors as sole power source and further that it includes means adapted for quick charging of said ultracapacitor power source.

2. A power tool according to claim 1, wherein said means are designed for contactless charging of the ultracapacitor power source and include at least a conductor coil, which is embedded in the outer shell of the tool body and electrically connected with said power source, whereby the conductor coil when charging the power tool functions as the secondary loop of a transformer circuit.

3. A power tool according to claim 1 or 2 comprising one or more of the following:
- an operational control module or print responsive to a central steering/processing unit;
- an electronic circuit for driving/controlling the electric motor w.r.t rotational speed, rotation sense, number of rotations, torque, brake and start parameters;
- an IC-component adapted for wireless (e.g. "bluetooth") communication with a remote station or control/communication unit;
- a DC motor with or without brushes;
- an AC/DC converter for the charging current towards the ultracapacitors;
- a voltage step-up circuit for the motor driver;
- a micro-controller for signal conversion between the communication module (e.g. "bluetooth") and drive or command circuit elements;
- a gear-box between motor shaft and tool spindle;
- a slip coupling between spindle and driven tool bit.

4. A power tool according to anyone of claims 1 to 3, wherein the tool body comprises a relatively larger rearward portion enclosing the ultracapacitors, a tapering portion connecting the rearward portion to a relatively narrower cylindrical or prismatic forward portion enclosing the electric motor and the tool drive system, and further comprises a handle, button or switch for starting/activating the tool.

5. A tool holder and charger device for use with a power tool according to claim 1,3 or 4, comprising a holder seat or ring having a receiving aperture matching the cross-section of the forward cylindrical portion of the power tool, said aperture including contacting means connected to the mains, wherein said contacting means have a shape and are located inside the seat aperture or ring such as to make firm contact, preferably enhanced by spring force, with mating contacts provided on the outside of the seated tool body, whereby the ultracapacitors are instantly loaded to a desired maximum electrical capacity upon insertion of the power tool in the holder device.

6. A tool holder and charger device for use with a power tool according to claims 2 to 4, comprising a holder seat or ring having a receiving aperture matching the cross-section of the forward portion of the power tool, wherein said seat or ring is configured as the primary loop of a transformer circuit and comprises a primary coil enclosed by an iron or similar transformer metal alloy, said primary loop having a mechanical and electrical design matching the shape of the secondary loop provided in the power tool body, such that upon inserting the tool in the holder device the transformer circuit is activated and the ultracapacitors receive transformed electric power from said secondary loop.

7. A tool holder or charger device according to claims 5 or 6, comprising a communication module (e.g. blue-tooth) adapted for wireless transfer of information and command signals to the power tool at a remote operation location.

8. An operating system comprising the combination of a power tool according to claims 1 to 4 and a tool holder/charger device according to claims 5 to 7.

9. Use of anyone of a power tool according to claims 1-4, a holder/charger device according to claims 5-7 or a system according to claim 8 for regulating, fine-tuning and controlling distance and/or position dependent or related functions and components in static and moving objects, instruments and equipment, in particular in vehicles such as automotive cars.

10. Installation for automatically adjusting the headlights of a plurality of cars in series, comprising a computer-aided optical unit (for instance a "Luminoscope^{®}") for determining the coordinates of the measured light beams, including the calculation of the required angular corrections relative to a perfect alignment, whereby said corrections are performed by acting on regulation screws of said headlights with an electrically powered screwdriver, **characterized in that** said installation comprises a set of power screwdrivers according to claims 1 to 4 with a tool holder and charger device according to claims 5-7, the latter being mounted together with the optical unit on a same movable carriage or roller frame.

11. A device system including a power tool according to any one of claims 1 to 4, wherein said device system is adapted for automatically adjusting driver assistance sensors of automotive vehicles and comprises means to monitor or control actual positions of vehicle and/or sensors and means to actuate and perform a desired position adjustment cycle in response to said actual positions.

12. Use of a power tool according to claims 1 to 4 or an operating system according to claim 8 for carrying out position adjustment cycles of control members or sensing components by wireless communication in industrial devices or installations other than cars and car manufacturing, said devices including instrumentation and steering systems in industrial production lines, guiding systems in ships, military vehicles aircraft, rockets and space vessels, satellites etc.

13. A cordless power tool having a housing with a power source compartment and a drive compartment including an electric motor, **characterised in that** the power source comprises a superbattery or the combination of a superbattery and an ultracapacitor, and **in that** the tool incorporates means for wireless communication with a remote control unit and electronic circuit means for driving the electric motor in response to the signals received by said wireless communication means.

14. A cordless power tool according to claim 13, further comprising means for monitoring the power capacity or charging state of said power source by the intermediate of said wireless communication means.

15. An operating system comprising a power tool according to claims 13 or 14 and a charging station receiving the power tool when not in use, wherein said charging station is adapted for automatic controlled charging the tool's power source and comprises wireless communication means co-responsive with the tool and with a central control unit connected with the charging station.

16. Installation for automatically adjusting the headlights of a plurality of cars in series, comprising a tool according to claims 13 and 14, or a system according to claim 15, wherein said tool or system is integrated with a computer-aided optical unit, e.g. a "Luminoscope^{®}" type or the like optical device, which is connected with a central control or processing unit.

17. Use of the tool of claims 13 and 14 or the system of claim 15 for automatic position adjustment or distance tuning of device and instrument components in vehicles, mobile objects and industrial installations.
